# FASCICULE DE BREVET EUROPEEN

(11) **EP 2 880 367 B1**
(45) Date de publication et mention de la délivrance du brevet: **06.11.2019**
(21) Numéro de dépôt: 13756623.8
(22) Date de dépôt: 30.07.2013
(51) Int. Cl.: F23R 7/00, F02C 9/26

(54) **CHAMBRE DE COMBUSTION CVC POUR TURBOMACHINE D'AERONEF COMPRENANT UNE VALVE D'ADMISSION / D'ECHAPPEMENT A TOURNANT SPHERIQUE**
TRIEBWERKE-BRENNKAMMER MIT KUGELFÖRMIGEM EINLASS / AUSLASSVENTIL
JET ENGINES COMBUSTION CHAMBER WITH SPHERICAL INTAKE / EXHAUST VALVE

(30) Priorité: 03.08.2012 FR 1257599
(43) Date de publication de la demande: 10.06.2015
(73) Titulaire: Safran Aircraft Engines, 75015 Paris (FR)
(72) Inventeur: ROBIC, Bernard, F-77550 Moissy-Cramayel Cedex (FR)
(74) Mandataire: Brevalex
(86) Numéro de dépôt international: PCT/FR2013/051832
(87) Numéro de publication internationale: WO 2014/020275

(56) Documents cités:
- EP-A1- 0 369 099
- WO-A1-2010/086091
- WO-A1-2011/084072
- US-A- 2 623 355
- US-A- 5 557 926
- US-A1- 2008 006 019
- US-B1- 7 328 680

## Description

### DOMAINE TECHNIQUE

L'invention se rapporte au domaine des chambres de combustion de turbomachines d'aéronef, du type à combustion à volume constant.

L'invention s'applique à tout type de turbomachine, en particulier les turboréacteurs, les turbopropulseurs, et les turbomachines à soufflantes non carénées (de l'anglais « Open Rotor »).

### ETAT DE LA TECHNIQUE ANTERIEURE

Classiquement, la chambre de combustion d'une turbomachine d'aéronef fonctionne selon le cycle de Brayton, dit à combustion à pression constante. Néanmoins, pour un gain de consommation spécifique, il a été envisagé de remplacer la chambre de combustion à cycle de Brayton par une chambre de combustion à cycle de Humphrey, dit à combustion à volume constant ou « CVC ».

Le document FR 2 945 316 décrit un exemple de réalisation d'une telle chambre de combustion CVC. La chambre comprend à l'entrée une valve d'admission de gaz comprimé capable d'osciller entre une position ouverte et une position fermée, et comporte à la sortie une valve d'échappement de gaz brûlé également capable d'osciller entre une position ouverte et une position fermée. Les positions des valves sont pilotées de manière synchronisée afin de mettre en œuvre les trois phases successives du cycle de Humphrey, à savoir admission - combustion - échappement.

Les documents US2623355, US5557926 et WO2011/084072 divulguent une chambre de combustion de turbomachine d'aéronef du type à combustion à volume constant.

Néanmoins, dans les solutions de l'art antérieur, la conception des valves d'admission et d'échappement s'avère perfectible, en particulier en termes de robustesse et d'étanchéité, cette dernière pouvant être problématique en particulier lors de la forte mise en pression observée durant la phase de combustion.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet une chambre de combustion de turbomachine d'aéronef du type à combustion à volume constant, selon la revendication 1.

De préférence, la chambre de combustion comprend une paroi latérale de forme cylindrique de section circulaire. Cette forme de paroi latérale, qui définit l'enceinte dans laquelle se produit la combustion, facilite la symétrie des flux de combustion et le transfert de chaleur dans l'enceinte. De plus, la coopération d'une telle forme avec des valves à tournant sphérique fermant la chambre à ses deux extrémités, permet d'obtenir des niveaux d'étanchéité satisfaisants, par exemple avec de simples éléments d'étanchéité.

Ainsi, ce mode de réalisation préféré permet l'ouverture et la fermeture de la valve par simple rotation relative de deux corps sphériques percés, imbriqués l'un dans l'autre. De façon générale, l'ouverture de la valve s'opère lorsque les perçages sont au moins partiellement en regard deux à deux, et la fermeture est obtenue par décalage angulaire de ces mêmes perçages que forment lesdits orifices et le passage de gaz.

De préférence, les corps sphériques intérieur et extérieur sont montés contrarotatifs. Dans ce cas de figure, ils forment chacun un tournant sphérique au sens de l'invention. Alternativement, seul l'un d'eux deux pourrait être un tournant, l'intérieur ou l'extérieur, l'autre restant fixe par rapport à la paroi latérale de la chambre. Le caractère contrarotatif des deux corps est particulièrement avantageux en ce qu'il permet de conserver le centre de chacun des deux diaphragmes dans une zone fixe par rapport à la paroi latérale de la chambre, et ce pendant toute la durée de l'ouverture du diaphragme. Le flux de gaz peut ainsi conserver la même direction, jugée la plus performante, durant toute la phase d'ouverture de la valve, c'est-à-dire depuis sa plus faible section d'ouverture, en passant par son ouverture maximale et jusqu'à sa fermeture. A cet égard, il est préférentiellement fait en sorte de maintenir chaque diaphragme centré par rapport à l'enceinte de combustion, pendant toute la position d'ouverture de la valve. Il en découle de très bonnes performances de combustion et une meilleure capacité à récupérer le travail de combustion dans une turbine.

De préférence, chacun desdits deux orifices de corps sphérique extérieur et des deux extrémités du passage de gaz dudit corps sphérique intérieur présente, lorsque vu de face, une forme générale ovale dont la longueur s'étend perpendiculairement à un axe de rotation du corps sphérique intérieur relativement au corps sphérique extérieur, et les centres de ces orifices/extrémités du passage de gaz sont agencés dans un même plan orthogonal audit axe de rotation, de préférence le plan diamétral. Cela permet de réduire les effets de forme en amande ou de fente du diaphragme en début et fin d'ouverture, à savoir aux instants où les sections de passage sont les plus faibles. En conservant un certain aspect circulaire à ces instants critiques, le flux de gaz traversant le diaphragme est maintenu dans de bonnes conditions. De préférence, les orifices/extrémités présentent des formes identiques ou similaires. Néanmoins, les formes des perçages peuvent être différentes, par exemple circulaires, carrées, etc., sans sortir du cadre de l'invention.

Si ce mode de réalisation présente deux corps sphériques imbriqués, il peut néanmoins être envisagé de prévoir un nombre de corps supérieur, tous participant à la formation des diaphragmes, ces derniers étant préférentiellement diamétralement opposés.

De préférence, au moins un élément d'étanchéité est prévu entre le tournant sphérique et un corps fixe de la valve. Il peut s'agir de joints d'étanchéité, et/ou de bagues en matériau abradable, et/ou d'éléments d'étanchéité similaires.

Préférentiellement, ce sont plusieurs segments d'étanchéité qui sont prévus entre les deux éléments, ces segments étant de préférence tous orientés dans des plans parallèles à l'axe de rotation du tournant sphérique, et orthogonalement à la direction principale du flux dans la chambre de combustion.

Des éléments d'étanchéité analogues peuvent être prévus entre les deux corps sphériques intérieur et extérieur, ou, en fonction des pressions et débits de fuites acceptables, ces derniers peuvent être directement en contact, sans interposition de joints entre ceux-ci.

Selon un autre mode de réalisation envisagé, la valve ne comprend qu'un unique tournant sphérique, définissant un diaphragme ou deux diaphragmes opposés avec un corps fixe de la valve.

L'invention a également pour objet un module de chambre de combustion comprenant au moins une chambre telle que décrite ci-dessus, comprenant des moyens d'entraînement en rotation dudit au moins un tournant sphérique, lesdits moyens d'entraînement étant préférentiellement conçus pour entraîner chaque tournant sphérique à vitesse de rotation constante. Même dans le cas où la vitesse est évolutive, le sens de rotation reste préférentiellement inchangé, ce qui facilité la mise en œuvre de l'entraînement.

De préférence, le module comprend une pluralité de chambres de combustion telle que celle décrite ci-dessus, les chambres étant réparties autour d'un axe moteur de la turbomachine, de préférence selon un agencement du type en barillet, tournant ou non.

De préférence, pour au moins une chambre de combustion et encore plus préférentiellement pour chacune des chambres, lesdits moyens d'entraînement sont conçus pour commander de façon synchronisée lesdites valves d'admission et d'échappement, avec un déphasage. De ce fait, les ouvertures de ces deux valves ne s'effectuent pas simultanément, de même que les fermetures de celles-ci ne s'effectuent pas non plus simultanément. Néanmoins, même si à certains instants les deux valves peuvent être toutes les deux en position ouverte / fermée, l'étendue d'ouverture / de fermeture de ces vannes est alors différente.

Enfin, l'invention a pour objet une turbomachine d'aéronef comprenant un tel module de combustion.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de côté d'un générateur de gaz de turboréacteur selon l'invention ;
- la figure 2 représente une vue schématique en coupe prise le long de la ligne II-II de la figure 1 ;
- la figure 3 est vue en perspective de l'une des chambres de combustion équipant le module de combustion montré sur la figure précédente, la chambre se présentant sous la forme d'un premier mode de réalisation préféré de l'invention ;
- la figure 4 est une vue en coupe longitudinale prise selon le plan P de la figure 3 ;
- la figure 4a est une vue partielle analogue à celle de la figure 4, avec la valve d'échappement de la chambre occupant une position différente ;
- la figure 5 et la figure 6 représentent, respectivement en perspective éclatée et de face, les tournants sphériques de la valve d'admission équipant la chambre de combustion montrée sur les figures 3 et 4 ;
- la figure 7A est une vue de face du tournant sphérique extérieur de la valve montrée sur les figures 5 et 6 ;
- la figure 7B est une vue en coupe prise le long de la ligne B-B de la figure 7A ;
- la figure 8A est une vue de face du tournant sphérique intérieur de la valve montrée sur les figures 5 et 6 ;
- la figure 8B est une vue en coupe prise le long de la ligne B-B de la figure 8A ;
- les figures 9A à 13A représentent schématiquement l'état des valves d'admission et d'échappement au cours d'un cycle de combustion ;
- les figures 9B à 13B représentent la valve d'admission de face, respectivement dans leurs états montrés sur les figures 9A à 13A ;
- les figures 9C à 13C représentent la valve d'échappement de face, respectivement dans leurs états montrés sur les figures 9A à 13A ;
- la figure 14 représente un graphe montrant la section d'ouverture des valves d'admission et d'échappement durant le cycle de combustion ;
- la figure 15 est une vue similaire à celle de la figure 4, avec la chambre de combustion se présentant sous la forme d'un second mode de réalisation préféré de l'invention ;
- la figure 16 représente une partie d'une chambre de combustion similaire à celle du second mode de réalisation, cette chambre se présentant sous la forme d'une alternative de réalisation.

### EXPOSÉ DÉTAILLÉ DE MODES DE RÉALISATION PRÉFÉRÉS

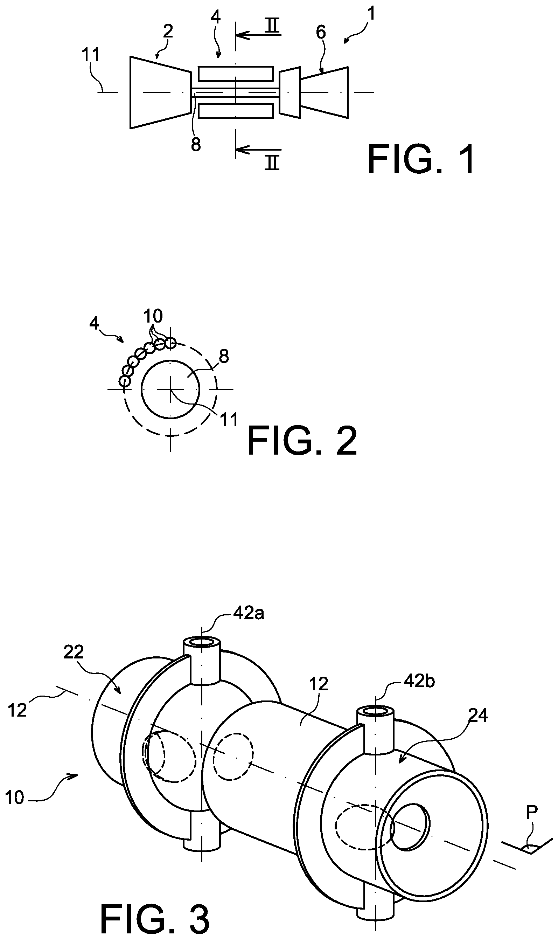

En référence à la figure 1, on peut apercevoir le générateur de gaz 1 d'une turbomachine d'aéronef, de préférence un turboréacteur.

Le générateur comprend classiquement, de l'amont vers l'aval, un ou plusieurs modules de compresseur 2, un module de combustion 4, et un ou plusieurs modules de turbine 6. De façon classique, les compresseurs et turbines sont reliés par un système d'arbres 8, lequel entraîne un récepteur de la turbomachine, par exemple une soufflante (non représentée) dans le cas d'un turboréacteur.

Le module de combustion 4 montré sur la figure 2 montre qu'il intègre une pluralité de chambres de combustion 10, réparties autour du système d'arbres 8 centré sur l'axe moteur 11. Les chambres 10, par exemple prévues dans un nombre entre 14 et 40, sont toutes préférentiellement identiques. Le nombre de ces chambres est préférentiellement pair, de façon à pouvoir neutraliser deux barillets de chambre diamétralement opposés en cas d'anomalie sur l'une d'elles, et éviter ainsi les dissymétries de flux à l'entrée de la turbine.

Les chambres sont agencées dans une configuration dite à barillet, en étant de préférence destinées à rester fixes par rapport au carter moteur au cours du fonctionnement de la turbomachine.

Chaque chambre 10 est du type CVC, c'est-à-dire fermée à ses extrémités par deux valves d'admission et d'échappement synchronisées afin de mettre en œuvre les trois phases successives du cycle de Humphrey, à savoir admission - combustion - échappement. Même si elles sont identiques, ces chambres 10 sont de préférence volontairement déphasées les unes des autre pour ce qui concerne la mise en œuvre du cycle de Humphrey. A titre d'exemple, une chambre donnée qui est en phase d'admission pourra être adjacente à une autre chambre en phase de combustion, et ainsi de suite.

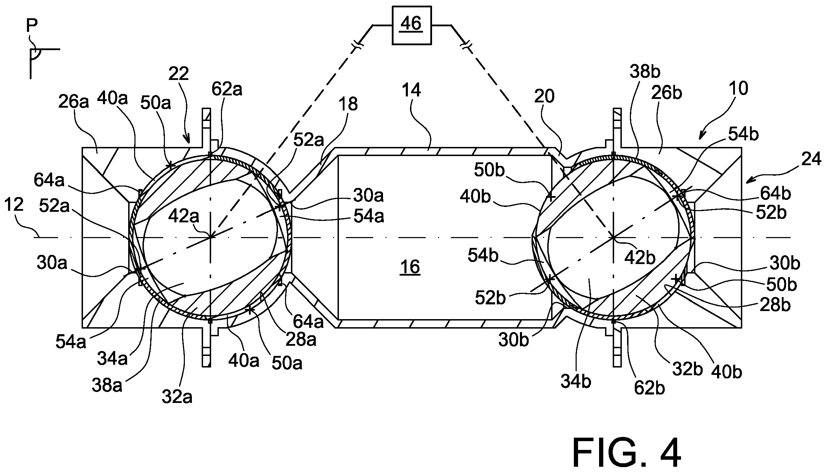

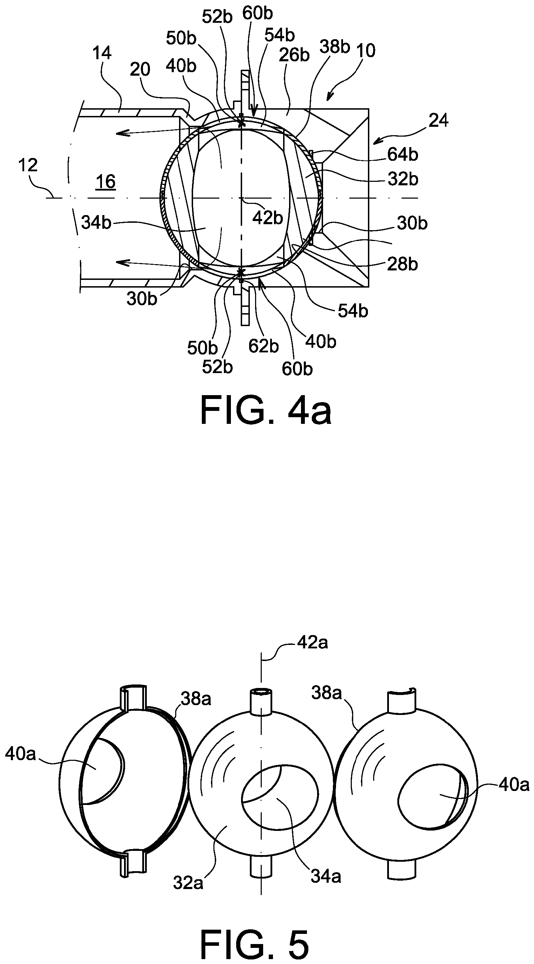

Les figures 3 et 4 représentent l'une des chambres de combustion 10. Elle est globalement orientée parallèlement à l'axe moteur, en s'étendant autour d'un axe central de chambre 12. La chambre 10 comprend une paroi latérale 14 de forme cylindrique de section circulaire, centrée sur l'axe 12. Cette paroi latérale définit radialement les limites de l'enceinte de combustion 16. A son extrémité avant, la paroi 14 porte fixement une paroi d'entrée 18 de forme tronconique centrée sur l'axe 12, de même qu'à son extrémité arrière, elle porte fixement une paroi de sortie 20 également de forme tronconique, centrée sur l'axe 12. Les parois 14, 18 et 20 peuvent être réalisées d'une seule pièce de révolution.

A l'extrémité rétrécie de la paroi tronconique 18 de fermeture amont de la chambre, celle-ci comporte une valve d'admission de gaz comprimé 22, de même qu'à l'extrémité rétrécie de la paroi tronconique 20 de fermeture aval de la chambre, celle-ci comporte une valve d'échappement de gaz brulé 24. Les deux valves 22, 24 sont spécifiques à la présente invention, et préférentiellement de conceptions identiques ou similaires.

La valve d'admission 22 comprend un corps fixe 26a formant un siège, ce corps creux 26a présentant une surface intérieure 28a en forme de sphère tronquée de centre situé sur l'axe 12. Le diamètre de cette surface est légèrement supérieur au diamètre intérieur de la paroi latérale 14. Aux extrémités de cette surface intérieure 28a sont respectivement définis deux orifices de siège 30a, opposés diamétralement. Celui orienté du côté de l'enceinte 16 est défini conjointement avec l'extrémité rétrécie de la paroi d'entrée 18. Celui situé à l'opposé, du côté du module de compresseur, est évasé vers l'amont afin de faciliter l'introduction dans la valve d'admission 22 du gaz comprimé sortant du module de compresseur. Les deux orifices de siège 30a sont de préférence de forme circulaire, centrés sur l'axe 12.

La surface intérieure 28b remplit la fonction de portée pour deux tournants sphériques de la valve d'admission, comme cela va être détaillé ci-dessous. Néanmoins, il est noté que la portée sphérique pourrait être remplacée par une portée cylindrique ou conique, sans sortir du cadre de l'invention.

L'une des particularités de la présente invention réside dans la mise en œuvre d'au moins un tournant sphérique conférant une robustesse et un niveau d'étanchéité satisfaisants, notamment pour résister à la forte mise en pression observée durant la phase de combustion à volume constant dans l'enceinte 16. Plus précisément, deux tournants sphériques sont donc ici mis en œuvre dans ce premier mode de réalisation préféré.

Il s'agit tout d'abord d'un corps sphérique intérieur 32a en forme de boule pleine, traversée par un passage de gaz 34a s'étendant selon un axe passant par le centre de cette boule, correspondant au centre de la surface de portée intérieure 28a du corps formant siège. La boule 32a est de préférence réalisée d'une seule pièce. Eventuellement, elle est percée de canaux de refroidissement pour la circulation d'un flux d'air destiné au refroidissement par impact de la sphère extérieure 38a décrite ci-après, et/ou au refroidissement par film de la surface extérieure de cette boule 32a.

Le passage 34a de la boule 32a est préférentiellement de section constante.

La valve 22 comporte par ailleurs un corps sphérique extérieur 38a en forme de sphère creuse, dont la surface intérieure est de diamètre légèrement supérieur au diamètre de la surface extérieure de la boule 32a, afin de pouvoir la loger et la maintenir en ajustement glissant permettant la libre rotation d'une sphère l'une dans l'autre. En outre, la surface extérieure de la sphère 38a est de diamètre sensiblement inférieur au diamètre de la surface intérieure de portée 28a du corps 26a, afin de pouvoir être logée et maintenue par celle-ci, en permettant également la libre rotation de la sphère dans la portée.

Le corps sphérique intérieur 38a est pourvu de deux orifices 40a distants l'un de l'autre, également diamétralement opposés. Les deux orifices 40a, traversant chacun l'épaisseur de la sphère, présentent des centres agencés sur un diamètre de la sphère.

Les corps sphériques intérieur et extérieur 32a, 38a, imbriqués l'un dans l'autre, sont montés rotatifs l'un par rapport selon un axe de rotation 42a, perpendiculaire à l'axe moteur 12. Plus précisément, chacun d'eux est monté rotatif sur le corps 26a formant siège, à l'aide de pivots ou éléments analogues. Comme cela sera détaillé ci-après, les corps sphériques intérieur et extérieur 32a, 38a sont destinés à être contrarotatifs, à savoir mis en rotation autour de l'axe 42a selon des sens opposés, et de préférence à vitesses constantes. A cet égard, il est noté que le module de combustion 4 comprend des moyens d'entraînement en rotation de ces tournants sphériques, ces moyens 46 représentés schématiquement sur la figure 4 comprenant classiquement un ou plusieurs moteurs commandés par une unité de commande, de préférence le FADEC. Ces moyens 46 sont d'ailleurs partagés avec la valve d'échappement 24.

Sur cette même figure 4, il a été représenté le centre 50a des orifices 40a, ainsi que le centre 52a de chacune des deux extrémités débouchantes 54a du passage de gaz 34a. Les quatre centres 50a, 50a, 52a, 52a sont agencés dans le même plan de coupe P de la figure 4, ce plan diamétral étant orthogonal à l'axe de rotation 42a. Cet agencement des centres sur le plan P est conservé durant la rotation des tournants sphériques 32a, 38a.

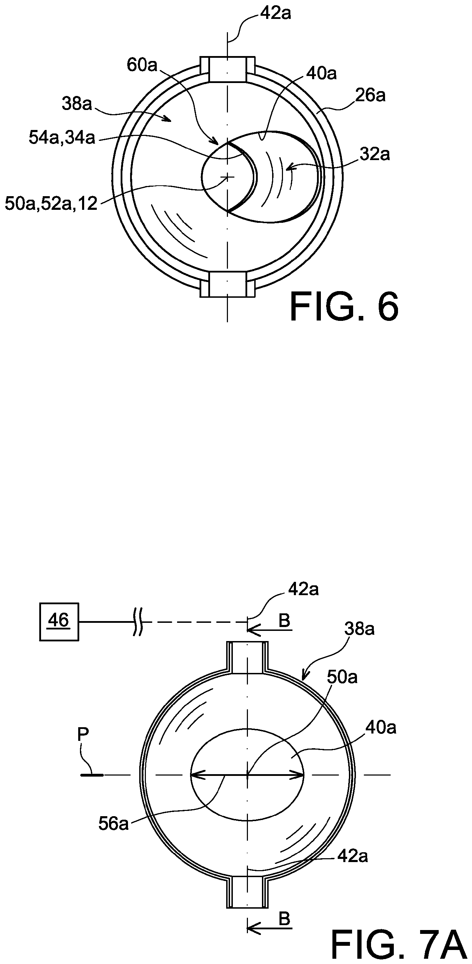

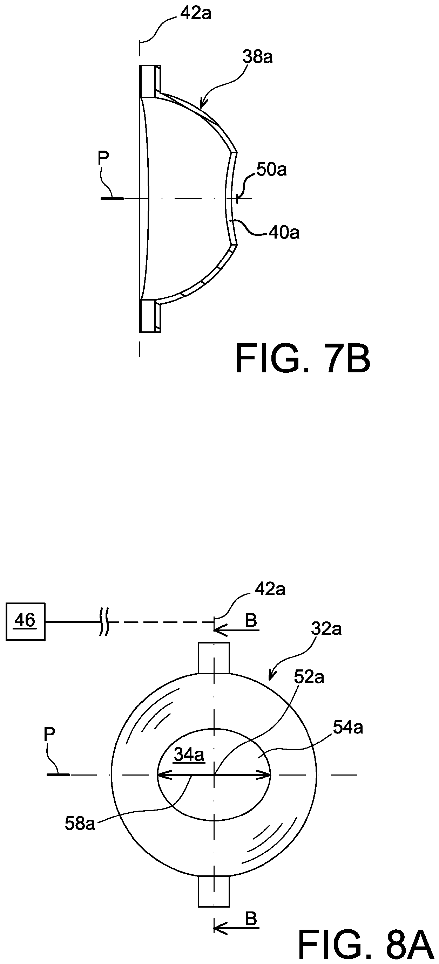

En référence aux figures 5 à 8B, il est représenté les deux tournants sphériques 32a, 38a. Comme le montre la figure 5, la sphère 38a peut être obtenue à l'aide de deux demi-sphères rapportées fixement l'une sur l'autre, par exemple par soudage. Chacune des demi-sphères présente l'un des deux orifices 40a. Ce dernier visible sur les figures 7A et 7B est tel que lorsqu'il est vu de face comme sur la figure 7A, il présente une forme générale ovale dont la longueur 56a s'étend perpendiculairement à l'axe de rotation 42a, cette longueur 56a s'inscrivant dans le plan P.

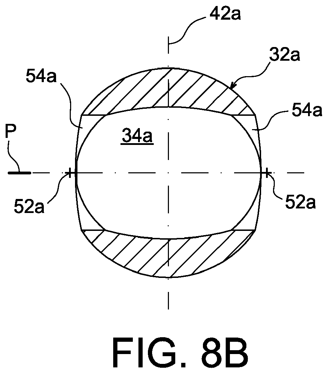

De manière analogue, chaque extrémité 54a du passage de gaz 34a, visible sur les figures 8A et 8B, est telle que lorsque vue de face comme sur la figure 8A, elle présente une forme générale ovale dont la longueur 58a s'étend perpendiculairement à l'axe de rotation 42a, cette longueur 58a s'inscrivant également dans le plan P. Plus précisément, les extrémités 54a et les orifices 40a présentent une forme sensiblement identique, de sorte que lorsque ces perçages sont alignés selon l'axe 12 de la chambre, ils se situent deux à deux dans la parfaite continuité l'un de l'autre. Dans cette position d'alignement, en vue de face, les longueurs 56a, 58a sont donc sensiblement identiques. Ces longueurs sont égales ou inférieures au diamètre de l'orifice 30a du corps fixe 26a.

Sur la figure 6, il est montré que chaque orifice 40a forme, avec l'une des extrémités 54a du passage de gaz 34a, un diaphragme 60a spécifique à la présente invention.

Chaque diaphragme 60a présente donc une section d'ouverture dépendant de l'étendue de la superposition entre l'orifice 40a et l'extrémité 54a formant ce diaphragme, cette étendue variant en fonction de la position relative angulaire entre les deux tournants 32a, 38a. La pleine ouverture du diaphragme 60a correspond à la forme des perçages 40a, 54a, la section diminuant au fur et à mesure que les centres 50a, 52a s'écartent circonférentiellement l'un de l'autre, au cours de la mise en mouvement contrarotatif des tournants 32a, 38a. De même, avant l'obtention de la pleine ouverture, la section augmente jusqu'à ce que les centres 50a, 52a s'aligne sur l'axe 12.

De par la forme ovale des perçages, le diaphragme 60a conserve en début et fin d'ouverture une forme globale se rapprochant de celle d'un disque, permettant de faire circuler le flux de gaz dans de bonnes conditions.

En raison de la disposition particulière des perçages 40a, 54a, les deux diaphragmes 60a se retrouvent en permanence diamétralement opposés, avec, à chaque instant, la même section d'ouverture. A cet égard, il est noté qu'au cours de la rotation des deux tournants, les deux diaphragmes 60a s'ouvrent soit en ayant leurs centres alignés sur l'axe 12, soit en ayant leurs centres alignés sur une axe perpendiculaire à ce même axe 12. Dans le premier cas, cela permet de placer la valve 22 dans une position ouverte permettant l'introduction de gaz comprimé dans l'enceinte 16. Cette configuration est obtenue deux fois au cours d'une rotation complète de chaque tournant 32a, 38a. Comme évoqué précédemment, à pleine ouverture, les deux diaphragmes 60a alignés avec les orifices 30a du corps fixe de valve présentent une section inférieure à celle de ces orifices 30a, impliquant que ces derniers n'interviennent pas dans la section de passage du gaz.

Dans le second cas, le gaz comprimé issu du module de compresseur ne peut pas transiter par les diaphragmes 60a et passer à travers le passage de gaz 34a, et donc ne peut pas rejoindre l'enceinte 16 car les diaphragmes 60a ne s'ouvrent pas sur les orifices 30a donnant l'accès à la chambre de la chambre. Malgré l'ouverture des diaphragmes, la valve 22 se trouve ainsi en position fermée. D'ailleurs, un système de joints d'étanchéité est prévu entre la surface intérieure 28a du corps fixe et la surface extérieure du corps sphérique extérieur 38a, de manière à ce que les gaz comprimés préalablement piégés dans le passage de gaz 34a ne pénètre pas dans l'enceinte de la chambre dans cette position fermée de la valve. De retour à la figure 4, un exemple de système de joints est représenté, réalisé à l'aide de trois segments d'étanchéité circulaires portés par le corps fixe 26a, et tous agencés dans des plans parallèles à l'axe de rotation 42a. Il s'agit d'un segment central 62a, situé dans un plan diamétral ou à proximité, et de deux segments latéraux 64a de diamètres inférieurs, situés à proximité des deux orifices 30a du corps formant siège 26a. Des joints analogues peuvent être placés entre les corps sphériques 32a, 38a, même si ces derniers sont de préférence en contact sphérique direct, sans joint d'étanchéité.

Par conséquent, lorsque les diaphragmes 60a sont alignés selon un axe perpendiculaire à l'axe 12 de la chambre, les gaz comprimés préalablement piégés dans le passage de gaz 34a ne peuvent s'échapper en direction de l'enceinte 16, en raison de la présence du joint latéral aval 64a évitant les fuites de gaz vers l'aval.

Toujours en référence à la figure 4, il est noté que la valve d'échappement de gaz brûlé 24 présente une conception identique ou similaire à celle de la valve d'admission 22 qui vient d'être décrite. Aussi, les éléments de la valve 24 identiques ou similaires aux éléments de la valve 22 portent les mêmes références numériques, seule l'extension « a » étant remplacée par l'extension « b ».

Par conséquent, ici aussi, en raison de la disposition particulière des perçages 40b, 54b, les deux diaphragmes se retrouvent en permanence diamétralement opposés, avec, à chaque instant, la même section d'ouverture. Egalement, au cours de la rotation des deux tournants, les deux diaphragmes s'ouvrent soit en ayant leurs centres alignés sur l'axe 12, soit en ayant leurs centres alignés sur une axe perpendiculaire à ce même axe 12. Dans le premier cas, cela permet de placer la valve 24 dans une position ouverte permettant l'échappement des gaz brûlés en dehors de l'enceinte 16. Cette configuration est obtenue deux fois au cours d'une rotation complète de chaque tournant 32b, 38b. Comme évoqué précédemment, à pleine ouverture, les deux diaphragmes alignés avec les orifices 30b du corps fixe de valve présentent une section inférieure à celle de ces orifices 30b, impliquant que ces derniers n'interviennent pas dans la section de passage du gaz.

Dans le second cas représenté sur la figure 4a, où les diaphragmes 60b sont alignés selon un axe perpendiculaire à l'axe 12, les gaz brûlés préalablement piégés dans le passage de gaz 34b après une étape d'échappement peuvent être libérés en transitant par les diaphragmes 60b et l'orifice amont 30b, pour rejoindre ensuite l'enceinte 16 comme cela a été schématisé par les flèches. Cela est permis en particulier par l'absence de segment de joint latéral amont, et par un orifice amont 30b de plus grand diamètre que celui de l'orifice aval 30b du corps fixe, ce qui constitue deux différences avec la valve d'admission 22. Ainsi, l'orifice amont 30b est de plus grand diamètre que l'orifice aval 30a de la paroi d'entrée 18, ceci étant obtenu en prévoyant des parois d'entrée 18 et de sortie 20 de formes différentes, la dernière ne se rapprochant pas autant de l'axe 12 que la première. Cette libération de gaz permet d'obtenir une fonction de recirculation des gaz brûlés, également dite EGR, pour assurer l'allumage du mélange dans l'enceinte 16, lors de l'étape de combustion qui suit celle de l'échappement précité. Cet allumage EGR s'effectue de préférence en combinaison avec un allumage classique, connu de l'état de l'art.

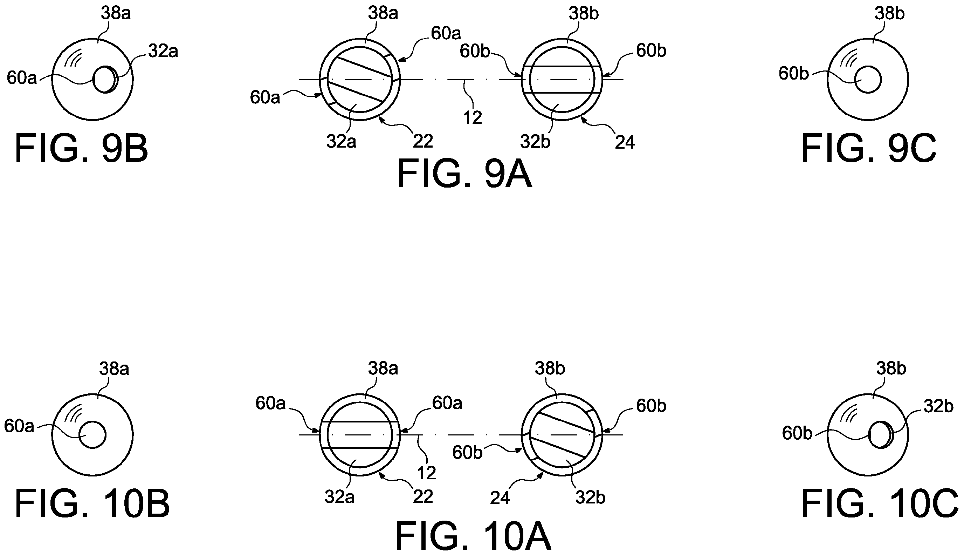

En référence à présent aux figures 9A à 14, il va être décrit les différentes phases du cycle de combustion à volume constant dans la chambre 10. Durant ce cycle, comme évoqué ci-dessus, les moyens d'entraînement appliquent des vitesses identiques de sens opposés aux tournants sphériques des valves. De plus, un déphasage existe entre les valves synchronisées d'admission et d'échappement, l'ouverture et la fermeture de ces valves ne s'effectuant pas simultanément, comme cela apparaît clairement sur les figures 9A à 13C.

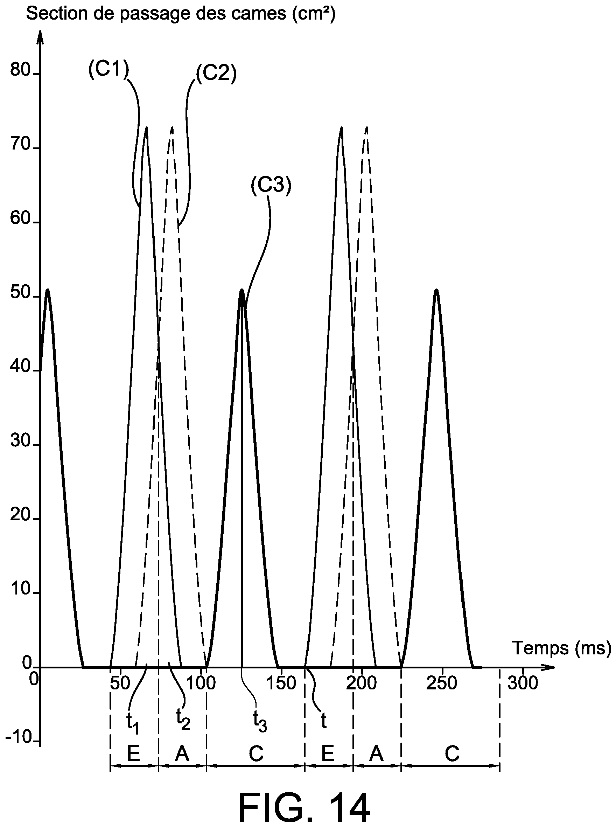

Sur le graphe de la figure 14, la courbe (C1) représente la section d'ouverture de la valve d'échappement 24, correspondant donc à la section d'ouverture des diaphragmes 60b lorsqu'ils sont alignés selon l'axe 12 de la chambre. La courbe (C2) représente la section d'ouverture de la valve d'admission, correspondant à la section d'ouverture des diaphragmes 60a lorsqu'ils sont alignés selon l'axe 12 de la chambre. Enfin, la courbe (C3) représente la section d'ouverture EGR de la valve d'échappement 24, correspondant à la section d'ouverture des diaphragmes 60b lorsqu'ils sont alignés selon un axe perpendiculaire à l'axe 12 de la chambre. Les phases « E », « A », « C » correspondent respectivement aux phases d'échappement, d'admission, de combustion.

Sur les figures 9A à 9C, les valves 22 et 24 sont en configuration permettant la mise en œuvre de la phase d'échappement. La section d'ouverture des diaphragmes 60b est maximale, et cet état correspond donc à celui de l'instant t1 sur le graphe de la figure 14. A cet instant, la valve 22 commence tout juste à s'ouvrir, pour amorcer la phase d'admission d'un nouveau cycle. La section de passage des diaphragmes 60a est donc très faible.

Au milieu de la phase d'admission tel que cela est représenté sur les figures 10A à 10C, la section d'ouverture des diaphragmes 60a est maximale, et cet état correspond donc à celui de l'instant t2 sur le graphe de la figure 14. A cet instant, la valve 24 est presque entièrement fermée, pour amorcer la phase de combustion. La section de passage des diaphragmes 60b est donc très faible.

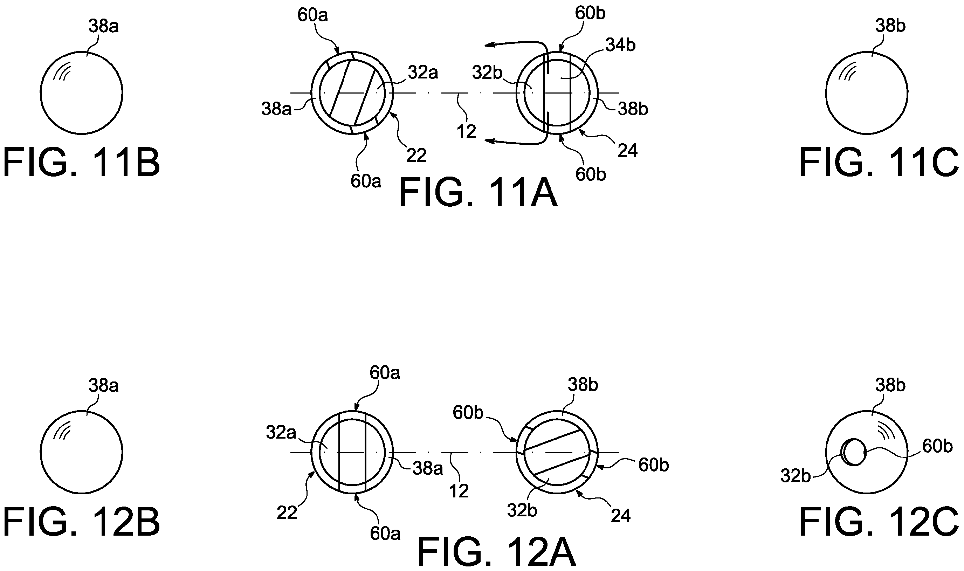

Les figures 11A à 11C représentent la phase de combustion durant laquelle les deux valves 22, 24 sont fermées. En revanche, la valve d'échappement 24 est en configuration EGR, à savoir dans l'état montré sur la figure 4a. Les gaz brûlés préalablement piégés dans le passage 34b sont donc recirculés dans l'enceinte de combustion. Ici, la section d'ouverture EGR est maximale, et cela correspond à l'instant t3 sur le graphe de la figure 14.

Les figures 12A à 12C représentent les valves juste avant l'amorce de la phase d'échappement, à l'instant t4 sur le graphe de la figure 14. Les diaphragmes 60b de la valve d'échappement sont prêts à s'ouvrir, tandis que la valve d'admission 22 reste en position fermée.

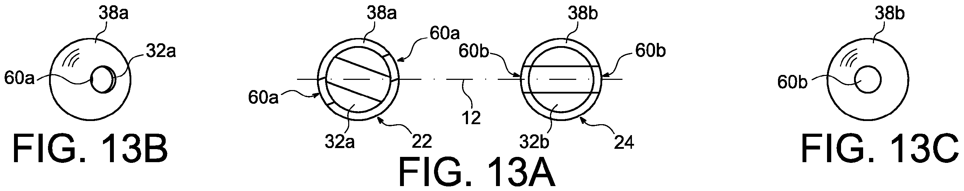

Les figures 13A à 13C représentent le retour des valves à leurs positions montrées sur les figures 9A à 9C, au cours de la phase d'échappement. Par conséquent, un cycle complet de combustion s'effectue au cours d'une demi-rotation de chaque tournant sphérique, ou, en d'autres termes, une rotation complète de chaque tournant sphérique correspond à deux cycles entiers de combustion.

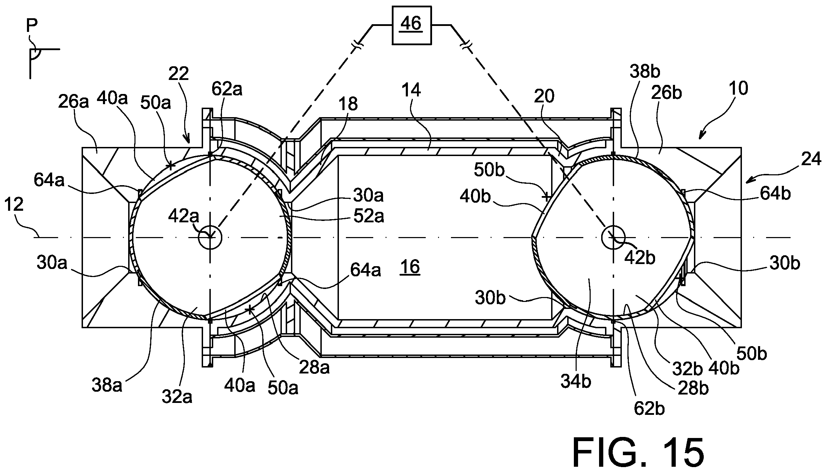

Sur la figure 15, il est représenté un second mode de réalisation préféré de la chambre de combustion 10, ce second mode différant du premier par le fait que chaque valve 22, 24 ne présente pas deux tournants sphériques, mais un seul. La forme de ce dernier peut être identique ou similaire à celle du tournant extérieur 38a ou celle du tournant intérieur 32a décrits ci-dessus. Quelle que soit la forme choisie pour ce tournant unique, les diaphragmes sont alors formés à l'aide des perçages dans les tournants, et à l'aide des orifices 30a, 30b des corps fixe 26a, 26b formant siège. Les autres éléments de la chambre, ainsi que la façon de mettre en œuvre le cycle de combustion, restent inchangés.

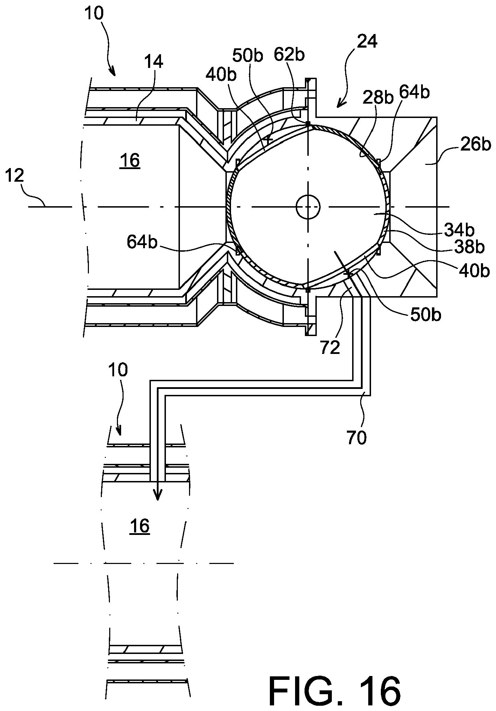

Enfin, sur la figure 16, il est montré une alternative de réalisation dans laquelle la valve d'échappement 24 présente un système de joints à trois segments, identiques ou similaires à ceux de la valve d'admission du premier mode de réalisation préféré. Dans ce cas de figure, lorsque le tournant sphérique unique 38b a ses orifices 40b orientés entre le joint central 62b et le joint latéral aval 64b, il est possible de réinjecter les gaz brûlés préalablement piégés dans le creux de la sphère assimilable au passage de gaz 34b précité, en direction d'une autre chambre de combustion adjacente par le biais d'une ou plusieurs canalisations 70 appropriées. Ces canalisations 70 sont connectées à des passages 72 traversant le corps 26b, pour déboucher au niveau de la surface intérieure sphérique 28b entre les deux segments de joint 64b, 62b.

Cela permet d'assurer la fonction d'EGR dans la chambre de combustion adjacente 10, qui présente de préférence un déphasage dans la mise en œuvre du cycle de combustion, en l'occurrence un léger retard. Toutes les chambres de combustion du module 4 en barillet peuvent ainsi être reliées les unes aux autres d'une façon identique ou similaire à celle représentée sur la figure 16.

Bien entendu, diverses modifications peuvent être apportées par l'homme du métier à l'invention qui vient d'être décrite, uniquement à titre d'exemples non limitatifs.

## Revendications

1. Chambre de combustion (10) de turbomachine d'aéronef du type à combustion à volume constant, ladite chambre comprenant une valve d'admission de gaz comprimé (22) capable d'adopter une position ouverte ainsi qu'une position fermée dans laquelle elle s'oppose à l'admission de gaz comprimé dans la chambre, ladite chambre comprenant en outre une valve d'échappement de gaz brûlé (24) capable d'adopter une position ouverte ainsi qu'une position fermée dans laquelle elle s'oppose à l'échappement de gaz brûlé en dehors de la chambre, **caractérisée en ce qu'**au moins l'une des valves d'admission et d'échappement (22, 24) comprend au moins un tournant sphérique (32a, 32b, 38a, 38b),
**en ce que** ladite valve (22, 24) comprenant ledit au moins un tournant sphérique comporte :
- un corps sphérique intérieur (32a) traversé par un passage de gaz (34a) ; et
- un corps sphérique extérieur (38a) logeant ledit corps sphérique intérieur (32a) et pourvu de deux orifices (40a) distants l'un de l'autre,
lesdits corps sphériques intérieur et extérieur (32a, 38a), dont au moins l'un d'eux forme ledit au moins un tournant sphérique, étant montés rotatif l'un par rapport, et lesdits deux orifices du corps sphérique extérieur (40a) étant agencés de manière à former conjointement avec ledit passage de gaz (34a), respectivement à chacune des deux extrémités (54a) de celui-ci, un diaphragme (60a)
et **en ce que** le tournant sphérique (32b) de la valve d'échappement (24) présente un passage de gaz (34b), ladite chambre étant conçue de manière à permettre, après une phase d'échappement de gaz ayant conduit à la fermeture de la valve d'échappement, une recirculation des gaz brûlés piégés dans ledit passage de gaz (34b).

2. Chambre de combustion selon la revendication 1, **caractérisée en ce qu'**elle comprend une paroi latérale (14) de forme cylindrique de section circulaire.

3. Chambre de combustion selon la revendication 1 ou la revendication 2, **caractérisée en ce que** lesdits corps sphériques intérieur et extérieur (32a, 38a) sont montés contra rotatifs.

4. Chambre de combustion selon l'une quelconque des revendications précédentes, **caractérisée en ce que** chacun desdits deux orifices (40a) de corps sphérique extérieur et des deux extrémités (54a) du passage de gaz dudit corps sphérique intérieur présente, lorsque vu de face, une forme générale ovale dont la longueur (56a, 58a) s'étend perpendiculairement à un axe de rotation (42a) du corps sphérique intérieur relativement au corps sphérique extérieur, et **en ce que** les centres (50a, 52a) de ces orifices/extrémités du passage de gaz (40a, 54a) sont agencés dans un même plan (P) orthogonal audit axe de rotation (42a).

5. Chambre de combustion selon l'une quelconque des revendications précédentes, **caractérisée en ce qu'**au moins un élément d'étanchéité (62a, 64a) est prévu entre ledit tournant sphérique (38a) et un corps fixe (26a) de la valve.

6. Module de chambre de combustion (4) comprenant au moins une chambre (10) selon l'une quelconque des revendications précédentes, **caractérisé en ce qu'**il comprend des moyens (46) d'entraînement en rotation dudit au moins un tournant sphérique (32a, 38a), lesdits moyens d'entraînement (46) étant préférentiellement conçus pour entraîner chaque tournant sphérique à vitesse de rotation constante.

7. Module selon la revendication 6, **caractérisé en ce qu'**il comprend une pluralité de chambres de combustion (10) selon l'une quelconque des revendications précédentes, réparties autour d'un axe moteur (11) de la turbomachine.

8. Module selon la revendication 6 ou la revendication 7, **caractérisé en ce que** pour au moins une chambre de combustion (10), lesdits moyens d'entraînement (46) sont conçus pour commander de façon synchronisée lesdites valves d'admission et d'échappement (22, 24), avec un déphasage.

9. Turbomachine (1) pour aéronef comprenant un module de combustion (4) selon l'une quelconque des revendications 6 à 8.

## Patentansprüche

1. Brennkammer (10) für Luftfahrzeug-Turbotriebwerke des Typs mit konstantem Verbrennungsvolumen, die ein Einlassventil für Druckgas (22) aufweist, das eine Öffnungsstellung sowie eine Schließstellung, in der es den Einlass von Druckgas in die Brennkammer verhindert, einnehmen kann, wobei diese Brennkammer ferner ein Auslassventil für Abgase (24) aufweist, das eine Öffnungsstellung sowie eine Schließstellung, in der es den Auslass von Abgasen aus der Brennkammer verhindert, einnehmen kann,
**dadurch gekennzeichnet,**
**dass** mindestens eines der beiden Ventile, des Einlass- und des Auslassventils (22, 24), mindestens ein kugelförmiges Wendeelement (32a, 32b, 38a, 38b) enthält,
**dass** das genannte Ventil (22, 24), das dieses mindestens eine kugelförmige Wendeelement enthält, folgendes aufweist:
- einen inneren kugelförmigen Körper (32a), durch den ein Gaskanal (34a) führt; und
- einen äußeren kugelförmigen Körper (38a), der diesen inneren kugelförmigen Körper (32a) aufnimmt und mit zwei voneinander entfernt angeordneten Öffnungen (40a) versehen ist,
wobei die genannten inneren und äußeren Körper ((32a, 38a), von denen mindestens einer das genannte kugelförmige Wendeelement bildet, drehend zueinander eingebaut sind, und die genannten zwei Öffnungen des äußeren kugelförmigen Körpers (40a) dergestalt angeordnet sind, dass sie zusammen mit dem genannten Gaskanal (34a) an dessen beiden Enden (54a) jeweils eine Blende (60a) bilden,
und **dass** das kugelförmige Wendeelement (32b) des Auslassventils (24) einen Gaskanal (34b) aufweist, wobei die genannte Brennkammer dergestalt ausgeführt ist, dass sie nach einer Gasausstoßphase, die zum Schließen des Auslassventils geführt hat, ein Umwälzen der in diesem Gaskanal (34b) gefangenen Abgase ermöglicht.

2. Brennkammer nach Anspruch 1,
**dadurch gekennzeichnet,**
**dass** sie eine zylindrisch geformte Seitenwand (14) mit kreisförmigem Querschnitt besitzt.

3. Brennkammer nach Anspruch 1 oder Anspruch 2,
**dadurch gekennzeichnet,**
**dass** die genannten kugelförmigen inneren und äußeren Körper ((32a, 38a) gegenläufig drehend eingebaut sind.

4. Brennkammer nach einem der vorherigen Ansprüche,
**dadurch gekennzeichnet,**
**dass** jede der genannten zwei Öffnungen (40a) des äußeren kugelförmigen Körpers und der beiden Enden (54a) des Gaskanals des genannten inneren kugelförmigen Körpers, von vorn betrachtet, eine allgemein ovale Form aufweist, deren Länge (56a, 58a) sich im rechten Winkel zu einer Drehachse (42a) des inneren kugelförmigen Körpers relativ zu dem äußeren kugelförmigen Körper erstreckt,
und **dass** die Mittelpunkte (50a, 52a) dieser Öffnungen/Enden des Gaskanals (40a, 54a) in einer gleichen Ebene (P) angeordnet sind, die im rechten Winkel zu der genannten Drehachse (42a) liegt.

5. Brennkammer nach einem der vorherigen Ansprüche,
**dadurch gekennzeichnet,**
**dass** zwischen dem genannten kugelförmigen Wendeelement (38a) und einem feststehenden Körper (26a) des Ventils mindestens ein Dichtungselement (62a, 64a) vorgesehen ist.

6. Brennkammer-Modul (4) mit mindestens einer Brennkammer (10) nach einem der vorherigen Ansprüche,
**dadurch gekennzeichnet,**
**dass** es Antriebsmittel (46) zum Drehen des genannten mindestens einen kugelförmigen Wendeelements (32a, 38a) aufweist, wobei diese Antriebsmittel (46) vorzugsweise konzipiert sind, um jedes kugelförmige Wendeelement mit konstanter Drehgeschwindigkeit anzutreiben.

7. Modul nach Anspruch 6,
**dadurch gekennzeichnet,**
**dass** es eine Vielzahl von Brennkammern (10) nach einem der vorherigen Ansprüche enthält, die um eine Antriebsachse (11) des Turbotriebwerks herum verteilt angeordnet sind.

8. Modul nach Anspruch 6 oder Anspruch 7,
**dadurch gekennzeichnet,**
**dass** die genannten Antriebsmittel (46) bei mindestens einer Brennkammer (10) konzipiert sind, um die genannten Einlass- und Auslassventile (22, 24) synchronisiert mit einer Phasenverschiebung zu steuern.

9. Turbotriebwerk (1) für Luftfahrzeuge, das ein Brennkammer-Modul (4) nach einem der Ansprüche 6 bis 8 aufweist.

## Claims

1. Constant-volume combustion chamber (10) for an aircraft turbine engine, said chamber comprising a compressed gas intake valve (22) capable of adopting an open position and a closed position wherein it blocks the intake of compressed gas into the chamber, said chamber further comprising a combusted gas exhaust valve (24) capable of adopting a closed position wherein it blocks the exhaust of combusted gas outside the chamber, **characterised in that** at least one of the intake and exhaust valves (22, 24) comprises at least one spherical plug (32a, 32b, 38a, 38b), **in that** said valve (22, 24) comprising said at least one spherical plug comprises:
- an inner spherical body (32a) traversed by a gas passage (34a); and
- an outer spherical body (38a) housing said inner spherical body (32a) and provided with two mutually distant orifices (40a),
said inner and outer spherical bodies (32a, 38a), of which at least one acts as said at least one spherical plug, being rotatably mounted in relation to each other, and said two orifices of the outer spherical body (40a) being arranged so as to form in conjunction with said gas passage (34a), respectively at each of the two ends (54a) thereof, a diaphragm (60a), and **in that** the spherical plug (32b) of the exhaust valve (24) has a gas passage (34b), and **in that** said chamber is designed so as to enable, after a gas exhaust phase resulting in the closure of the exhaust valve, recirculation of the combusted gases trapped in said gas passage (34b).

2. Combustion chamber according to claim 1, **characterised in that** it comprises a cylindrical side wall (14) with a circular cross-section.

3. Combustion chamber according to claim 1 or claim 2, **characterised in that** said inner and outer spherical bodies (32a, 38a) are mounted contra-rotating.

4. Combustion chamber according to any of the above claims, **characterised in that** each of said two outer spherical body orifices (40a) and the two ends (54a) of the gas passage of said inner spherical body has, when viewed from the front, an oval overall shape wherein the length (56a, 58a) extends perpendicularly to an axis of rotation (42a) of the inner spherical body in relation to the outer spherical body, and **in that** the centres (50a, 52a) of these orifices/ends of the gas passage (40a, 54a) are arranged in the same plane (P) orthogonal to said axis of rotation (42a).

5. Combustion chamber according to any of the above claims, **characterised in that** at least one sealing element (62a, 64a) is provided between said spherical plug (38a) and a fixed body (26a) of the valve.

6. Combustion chamber module (4) comprising at least one chamber (10) according to any of the above claims, **characterised in that** it comprises means (46) for driving said at least one spherical plug (32a, 38a) in rotation, said drive means (46) being preferentially designed to drive each spherical plug at a constant rotational speed.

7. Module according to claim 6, **characterised in that** it comprises a plurality of combustion chambers (10) according to any of the above claims, distributed about a driving axis (11) of the turbine engine.

8. Module according to claim 6 or claim 7, **characterised in that** for at least one combustion chamber (10), said drive means (46) are designed to control said intake and exhaust valves (22, 24) in a synchronised fashion, with a phase shift.

9. Aircraft turbine engine (1) comprising a combustion module (4) according to any of claims 6 to 8.
